Europäisches Patentamt

European Patent Office

Office européen des brevets

(19)

(11) Veröffentlichungsnummer: **0 019 820**
A1

(12) EUROPÄISCHE PATENTANMELDUNG

(21) Anmeldenummer: 80102745.9

(51) Int. Cl.³: **F 24 J 3/04**, F 24 D 19/00

(22) Anmeldetag: 17.05.80

(30) Priorität: 18.05.79 DE 2920141

(43) Veröffentlichungstag der Anmeldung: 10.12.80
Patentblatt 80/25

(84) Benannte Vertragsstaaten: AT BE CH DE FR GB IT LI NL SE

(71) Anmelder: Mengeringhausen, Max, Dr.-Ing., Kantstrasse 18, D-8700 Würzburg (DE)

(72) Erfinder: Mengeringhausen, Max, Dr.-Ing., Kantstrasse 18, D-8700 Würzburg (DE)

(54) System zur Rückgewinnung und Wiederverwendung von Transmissionswärme bei Gebäuden sowie Bautafeln und Regelanlage für dieses System.

(57) Das System benutzt zur Energiegewinnung aus Transmissionswärme und ggf. auch aus der Atmosphäre als Wärmetransportmittel zwischen Wärmefangelementen und einer Wärmepumpe (10) Luft in einem geschlossenen Kreislaufsystem. Die umlaufende Luft nimmt Wärme in Luftkammern (4) der Wärmefangelemente auf, die nach aussen durch eine Wand (5) mit kleinem Wärmedurchlasswiderstand, nach innen durch eine Wand (2a) mit Wärmedämmschicht (3) begrenzt sind.

Die Eintrittstemperatur der Wärmetransportluft, die in den Luftkammern (4) erwärmt wird, muss unter dem Mittelwert der Umgebungstemperatur der Wärmefangelemente liegen. Die in den Luftkammern (4) zugeführte Wärme wird in der Wärmepumpe (10) der Luft entzogen und einem Nutzungssystem (11, 12) im Gebäude zugeführt. Nach dem Wärmeentzug in der Wärmepumpe (10) wird die Wärmetransportluft wieder in die Wärmefangelemente eingeleitet.

Das System wird sowohl für Dächer wie auch für Wände von Gebäuden verwendet. Auch nachträglich kann das System zur Altbaumodernisierung verwendet werden, z.B. in Form von Vorhangfassaden und mit einer Zusammenfassung der technischen Teile (Wärmepumpe, Armaturen, Regler usw.) in einer serienmässig gefertigten Raumzelle (68).

– 1 –

## System zur Rückgewinnung und Wiederverwendung von Transmissionswärme bei Gebäuden

Die Erfindung bezieht sich auf ein System zur Rückgewinnung und Wiederverwendung von Transmissionswärme bei Gebäuden mit Hilfe einer Wärmepumpe, mit in den Außenteilen (Außenwände, Dach und/oder Fenster) des Gebäudes vorgesehenen großflächigen Luftkammern.

Im Rahmen der Maßnahmen zur Einsparung fossiler Energien spielt neben der Nutzung der Solar- und Umwelt-Energie (z.B. Erdwärme, Wasserwärme) der sparsame Umgang mit der zur Beheizung von Gebäuden dienenden Energie die Hauptrolle. Wesentliche Einsparungen können bereits durch zusätzliche Wärmedämmung erzielt werden. Noch größere Bedeutung kann jedoch die Wärme-Rückgewinnung, d.h. die Nutzbarmachung der sogenannten "Transmissionswärme" der Gebäude in den Ländern gewinnen, die in der kalten Jahreszeit erhöhten Bedarf an Heizwärme haben, während gleichzeitig in dieser Zeit die nutzbare Sonnenwärme relativ gering ist. Bekannt ist im Prinzip, die Wärmeverluste durch Luftkammern in den Umfassungswänden (z.B. bei sogen. Hohlziegeln) zu verringern. Bekannt ist ferner (DE-OS 25 47 214), zur Wärmerückgewinnung bei Gebäuden großflächiger Luftkammern oder, Hohlräume in den Wänden zu benutzen, wobei jedoch die Luft in diesen Luftkammern zur Aufnahme der Transmissionswärme ausschließlich der Außenatmosphäre entnommen wird, was bei niedrigen Außentemperaturen Nachteile hat. Schließlich ist auch bekannt, Wärmepumpen bei der vorstehenden Wärmerückgewinnung einzusetzen.

Die Aufgabe der Erfindung ist es, ein System und die zugehörigen Baukomponenten zu schaffen, die mit anderen vorhandenen und üblichen Einrichtungen (wie z.B. Rohrleitungen und industriell hergestellten Wärmepumpen) praktisch von "Jedermann" eingesetzt werden können, um eine besonders wirtschaftliche Wärmerückgewinnung aus Transmissions-Wärme zu erreichen. Die vorliegende Erfindung soll auch dazu dienen, die Wärmerückgewinnung aus Transmissions-Wärme mit der Gewinnung von Umwelt-Wärme zu verbinden bei Neubauten, für die Nachrüstung von Altbauten und ganz speziell bei solchen Gebäuden, bei denen eine hohe Licht-Ausbeute notwendig ist (z.B. Gewächshäuser oder Shed-Dächer).

Die Lösung obiger Aufgabe erfolgt durch die Kombination folgender Merkmale:
a) zum Wärmetransport zwischen den "Wärme-Fangelementen" und der Wärmepumpe dient eine begrenzte Menge von Transport-Luft, die in einem abgeschlossenen Umlauf-System zirkuliert;
b) die Transport-Luft wird in die Wärme-Fangelemente mit einer Temperatur eingeführt, die unter dem Mittelwert der Umgebungstemperatur der Wärme-Fangelemente liegt.

Das Grundprinzip der vorliegenden Erfindung beruht auf folgender Gedankenkette:
Selbst bei guter Wärmedämmung eines Gebäudes (z.B. einer Außenwand) findet in der Heizperiode ein ständiger Wärme-Fluß vom warmen Innern des Gebäudes in Richtung zur kälteren Umwelt statt. Bei Gebäuden mit hoher Lichtaufnahme,

wie z.B. Gewächshäusern ist diese ständige Wärme-Strömung besonders hoch. Der erste Grundgedanke ist es, die Transmissions-Wärme durch Transportluft "abzufangen" bevor sie die umfassenden Baukonstruktionen (Wände, Dachflächen, Fenster) verläßt. Der zweite Grundgedanke ist es, die "abgefangene" Wärme durch Wärmepumpen auf eine höhere Temperatur zu heben. Der dritte Grundgedanke besteht darin, die in der Wärmepumpe auf höhere Temperatur gebrachte Wärme wieder praktischen Aufgaben, insbesondere bei Gebäuden der Raumheizung zuzuführen.

Die praktische Realisierung der vorliegenden Erfindung erfolgt mit einer Bautafel, die wie die bisher üblichen Bauelemente für die Abdeckung von Dächern oder für die Wand-Ausbildung statisch ausgebildet sein kann und entsprechend den bisherigen Gepflogenheiten wärmegedämmt ist, jedoch zusätzlich auf der "Kalt-Seite" eine im wesentlichen abgeschlossene Luftkammer besitzt, die eine sehr große Oberfläche entsprechend der Gesamtfläche der Bautafeln aufweist und Anschlußvorrichtungen für die Zuleitung und Ableitung von Transport-Luft enthält.

Ein weiteres Kennzeichen der Erfindung besteht darin, daß die umlaufende Luft in einem geschlossenen Kreislaufsystem geführt wird: Führt man nun die vom "Wärmefangelement" kommende Luft der Wärmepumpe zu, so kann man ihr die vorher aufgenommene Wärme entziehen und nutzbar machen für beliebige Zwecke, beispielsweise für die Erwärmung von Gebrauchswasser oder ähnliche Aufgaben. Die abgekühlte Luft wird dann im Kreislauf wieder der Luftkammer gegenüber der Außenseite des "Wärmefangelementes" zugeführt und der Zyklus beginnt von neuem. Richtet man es so ein, daß die aus der Wärmepumpe kommende abgekühlte Luft beim Eintritt etwa der mittleren Temperatur der Umgebung des "Wärmefangelementes" entspricht, so tritt durch die Außenwand der geschlossenen außenliegenden Luftkammer kein zusätzlicher Wärmeverlust ein. Liegt

- 4 -

0019820

aber die Temperatur in der Luftkammer des "Wärmefangelementes" unter der Außentemperatur, so wird umgekehrt durch die Außenwand noch Wärme von außen aufgenommen. Diese aufgenommene Wärme kann dann zusätzlich dem Luftkreislauf und über diesem dem zu beheizenden Gebäude, der Warmwasserbereitung und dgl. zugeführt werden.

Besonders vorteilhaft ist es, die Wärmefangelemente so zu typisieren und auszubilden, daß sie reihenweise in einer Richtung oder sogar flächenhaft in zwei Koordinaten oder räumlich in mehreren Richtungen addiert werden können. Hierbei ist es ganz besonders vorteilhaft, die Addition mit Hilfe der Zu- und Ableitungen vorzunehmen.

Eine erfindungsgemäße Weiterbildung des Systems besteht darin, daß die durch die Wärmepumpe abgekühlte Luft wahlweise entweder als reineZirkulationsluft umläuft oder teilweise oder ganz aus der Außenatmosphäre stammt. Es bestehen somit folgende Möglichkeiten:

1. Das System wird wahlweise ausschließlich (wie bekannt) mit der aus der Außenatmosphäre angesaugten Luft betrieben, die nach Verlassen der Wärmepumpe im abgekühlten Zustand wieder vollständig in die Außenatmosphäre zurückgeführt wird.

2. Um ein den verschiedensten Witterungsbedingungen anpaßbares System zu schaffen, ist die Möglichkeit vorgesehen, die Luft aus der Außenatmosphäre teilweise mit der im Wärmerückgewinnungssystem zirkulierenden Luft zu mischen.

3. Schließlich besteht erfindungsgemäß die Möglichkeit, z.B. bei niedrigen Außentemperaturen oder aus anderen Gründen und ungünstigen Witterungsbedingungen die Außenluftzufuhr völlig einzustellen und ausschließlich im sogenannten Umluftverfahren, d.h. mit einem ge- schlossenen Luftkreislauf, zu arbeiten.

- 5 -

0019820

4. Wesentlich ist ferner, daß bei dem erfindungsgemäßen Wärmerückgewinnungsverfahren die Außenluft nicht ausschließlich direkt in die Wärmepumpe gelangen muß, sondern über den Umweg der "Wärmefangelemente " für die Transmissionswärme der Wärmepumpe zugeführt werden kann. (Wenn hierbei die in den Luftkammern erwärmte Luft in der Wärmepumpe unter die Temperatur der Luft aus der Außenatmosphäre abgekühlt wird, ist der Nutzeffekt der Einbeziehung von Außenluft in das Wärmerückgewinnungssystem besonders hoch).

Allgemein ist von Bedeutung - insbesondere aber, wenn die der Außenatmosphäre entnommene Luft mit einer im Wärmerückgewinnungssystem zirkulierenden Luftmenge gemischt wird - daß die Eintrittstemperatur der gemischten Luft in die Luftkammern in einem optimalen Verhältnis an die gewünschte Mitteltemperatur der Luft in den Luftkammern angepaßt bzw. entsprechend einreguliert wird. Zu diesem Zweck werden in die verschiedenen Luftströmungswege Steuerungsorgane eingebaut, die über eine Regeleinrichtung so gesteuert werden, daß optimale Verhältnisse hinsichtlich des Wärmegewinns entstehen und ein Minimum an Primärenergie für den Gesamtbetrieb der Wärmerückgewinnung verbraucht wird.

Eine weitere Verbesserung wird dadurch erzielt, daß die Wärmepumpe in bekannter Weise durch eine Brennkraftmaschine angetrieben wird, daß aber gemäß der vorliegenden Erfindung als Verbrennungsluft solche durch die Transmissionswärme aufgeheizte Luft angesaugt wird. Dadurch wird der Energieverbrauch der Brennkraftmaschine zusätzlich reduziert. Zugleich werden die heißen Abgase der Brennkraftmaschine in der Wärmepumpe ausgenutzt. In diesem Fall wird also sowohl die Verbrennungs-Wärme der Primär-Energie aus den heißen Abgasen der Brennkraftmaschine, wie auch ein Teil der Eigenwärme der Außenluft sowie ein wesentlicher Teil der Transmissionswärme aus den Wärmefangelementen von der Wärmepumpe verwertet.

Die Erfindung wird anschließend anhand der nur Ausführungsbeispiele darstellenden Zeichnungen erläutert.
Es zeigen:

Figur 1 (zur Vereinfachung ohne ein ganzes Gebäude) zwei miteinander in Reihe gekuppelte Bautafeln als Wärme-Fangelemente und Außenwandteile in Verbindung mit einer schematisch gezeigten Wärmepumpe;

Figur 2 eine Vorderansicht eines Shed-Daches mit Wärme-Fangelementen;

Figur 3 eine Kombination der in den Figuren 1 und 2 gezeigten Wärme-Fangelemente in Verbindung mit einer Wärmepumpe;

Figur 4 eine Schrägansicht von einem Teil einer lichtdurchlässigen Bautafel bzw. Wärme-Fangelements;

Figuren 4 A und 4 B  je eine Teil-Schnittansicht im Bereich der beiden gegenüberliegenden Ränder der Bautafel der Figur 4;

Figur 5 eine Schrägansicht eines Gebäudes in der Form eines Gewächshauses , teilweise ohne Dach, bei dem das erfindungsgemäße System angewendet ist;

Figur 6 eine Querschnittsansicht des Gebäudes der Figur 5, die besonders das Rohrsystem mit den Regelorganen veranschaulicht, welches die Luftkammern und die Wärmepumpe verbindet;

Figur 7 eine der Figur 6 ähnliche Querschnittsansicht, die jedoch eine zweistufige Wärmepumpe zeigt, welche mit einem Wärmespeicherbehälter zusammenarbeitet;

Figur 8 eine Raumzelle mit einer eingebauten Regelanlage für das Wärmerückgewinnungssystem;

Figur 9 eine Schrägansicht eines weiteren Gewächshauses, teilweise ohne Außenhaut, bei dem das Dach und die Seitenwände als Wärme-Fangelemente zur Wärmerückgewinnung ausgebildet sind;

Figur 10 eine Teil-Schnittansicht durch das Dach des Gewächshauses der Figur 9 und

Figur 11 eine Vorderansicht eines Shed-Daches, bei dem eine die Außenhaut tragende Raumfachwerkkonstruktion innerhalb der Wärme-Fangelemente bzw. deren Luftkammern angeordnet ist.

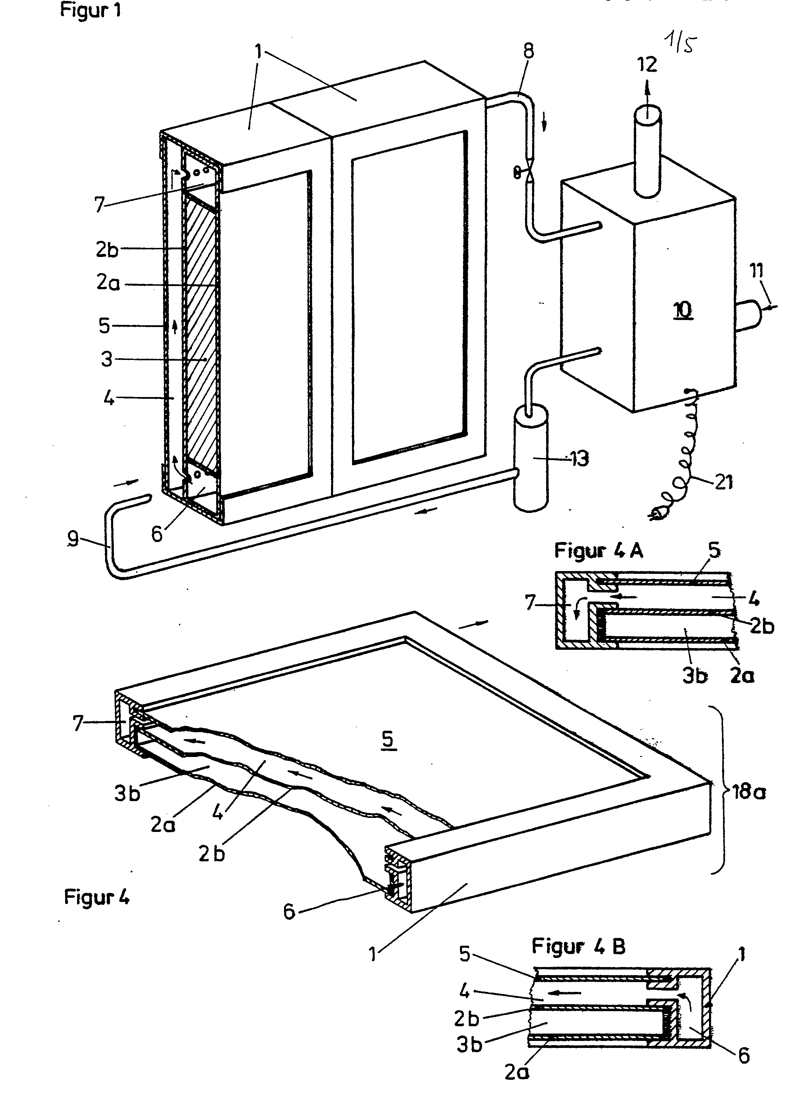

In Figur 1 sind (zur Vereinfachung zunächst ohne ein ganzes Gebäude) zwei miteinander in Reihe gekuppelte Bautafeln als Wärmefangelemente und Außenwand-Teile zusammen mit der schematisch angedeuteten Wärmepumpe gezeigt. Die einzelnen Bautafeln bzw. Wärmefangelemente sind in einer Rahmenkonstruktion 1 gefaßt. Sie enthalten zwischen einer Rückwand 2a und einer Mittelwand 2b eine Wärmedämmung 3, die einen möglichst großen Wärmedurchlaß-Widerstand besitzt. Auf der Außenseite der Bautafeln ist die Luftkammer 4 angeordnet, die gegenüber der Umwelt durch eine Außenwand 5 abgeschlossen ist, wobei diese Außenwand 5 beispielsweise aus einem Blech ausgebildet ist. Dabei kann der Wärmedurchlaß-Widerstand dieser Außenwand 5 gering sein gegenüber dem Wärmedurchlaß-Widerstand der Wärmedämmung 3, weil ja die Temperatur in der Luftkammer 4 im Regelfall im Bereich der Umgebungstemperatur gehalten wird. Die Luft in der Luftkammer 4 wird erneuert durch eine Zuleitung 6 und wird abgeführt durch eine Ableitung 7, wobei die Verbindung der Leitungen zur Luftkammer 4 hier durch Löcher oder Schlitze erfolgt. Die Leitungen 6 und 7 verlaufen in Richtung der äußeren oberen und unteren Bautafel-Begrenzung und sind so ausgebildet, daß sie am Ende mit Nachbar-Bautafeln gekuppelt werden können. Das Ableitungsrohr 8 der einen Reihe von Leitungen 7 und das Zuleitungsrohr 9 der anderen Reihe von Leitungen 6 ist verbunden mit der Wärmepumpe 10, die die aus den Luftkammern 4 entnommene Luft abkühlt und die entzogene Wärme dazu benutzt, um beispielsweise die aus dem Gebäudeinnern kommende Luft 11 zu erwärmen und als Warmluft 12 wieder dem Gebäude zur Raumheizung oder z.B. zur Warmwasserbereitung zuzuführen. Damit die in der Wärmepumpe 10 abgekühlte Luft nicht in unerwünschter Weise im System Wasser

0019820

abscheidet oder zur Eisbildung Anlaß gibt, wird die in der Wärmepumpe abgekühlte Luft in einem Entfeuchter 13 unter den Taupunkt der tiefsten infrage kommenden Temperatur abgekühlt. Praktisch wird dementsprechend die entfeuchtete Luft über das Zuleitungsrohr 9 dem "Wärmefang-System" so zugeführt, daß innerhalb der Luftkammer 4 eine Erwärmung ohne Wasser-Kondensation stattfinden kann, auch wenn die Außenwände 5 durch die Umgebungstemperatur stark abekühlt sind.

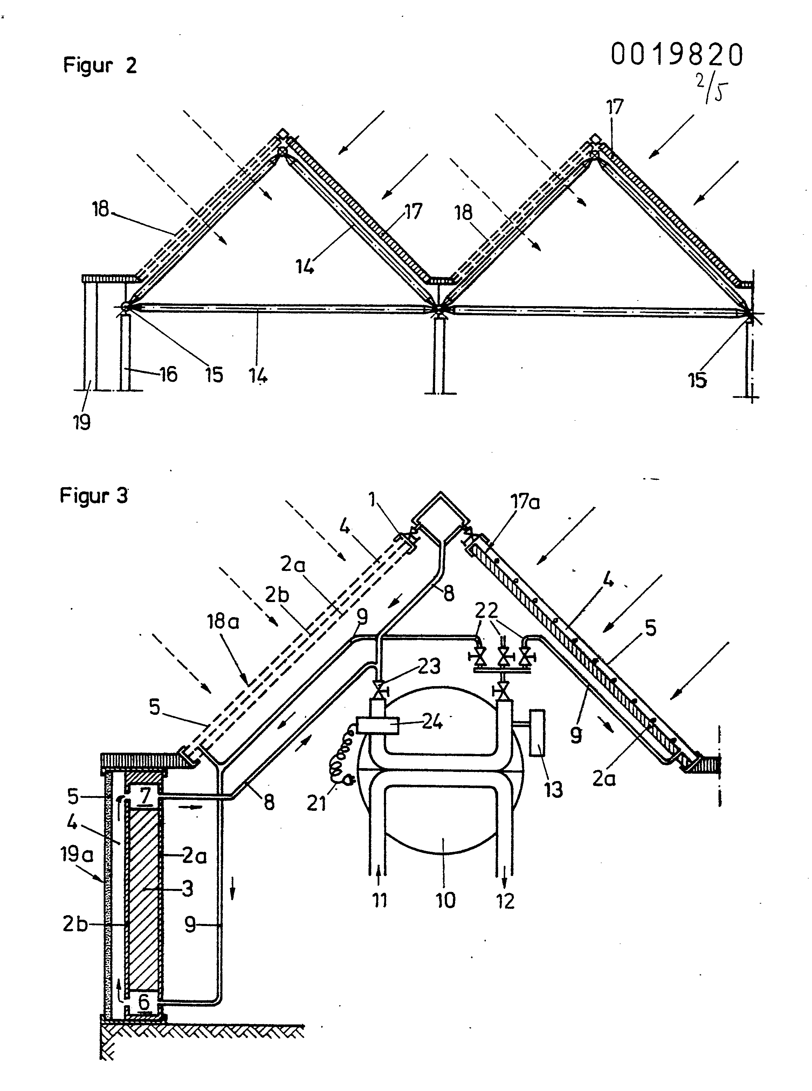

Figur 2 zeigt ein Anwendungsbeispiel der Erfindung für ein Gebäude mit einem sogen. Sheddach, bei dem ein Raumfachwerk aus Stäben 14 sowie Knotenstücken 15 auf Stützen 16 aufgelagert ist und schräge Dachflächen bildet. Die schrägen Dachflächen sind im vorliegenden Falle auf der einen Seite (in Fig. 2 rechts) durch lichtundurchlässige Bautafeln 17 sowie auf der entgegengesetzten Seite (in Fig. 2 links) durch lichtdurchlässige Bautafeln 18 abgedeckt. In Ergänzung der für das Dach eingesetzten Stützen 16 werden dann zusätzliche Wände 19 als senkrechter Raumabschluß nach außen angewandt. Die Bautafeln 17, 18, welche hier Dachelemente bilden und die Wände 19 können erfindungsgemäß ausgebildet und mit einer Wärmepumpe gekoppelt sein. In ähnlicher Weise können auch Gewächshäuser mit Satteldächern ausgeführt werden, mit dem Unterschied, daß hier beide Arten von Schrägflachen im Interesse einer möglichst großen Lichtdurchlässigkeit vollkommen mit Glas abgedeckt werden. Je größer aber der Glasanteil ist, desto größer sind auch die Wärmeverluste. Ferner kann bei diesen Glasabdeckungen, wie durch die Erfindung vorgeschlagen, nur Luft als Wärmetansportmedium verwendet werden.

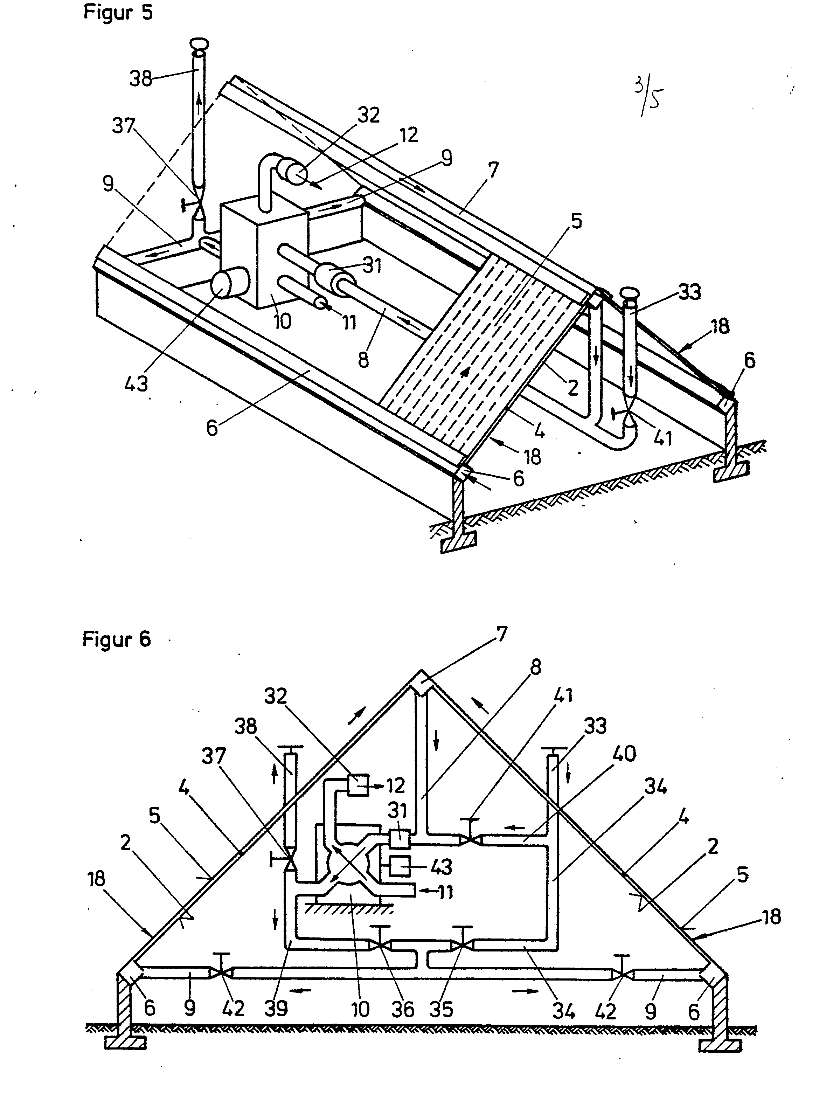

Figur 3 zeigt die Anwendung des bereits in Figur 1 grundsätzlich dargestellten Prinzips auf ein Gebäude der in Figur 2 gezeigten Bauart. Hier ist wiederum auf der linken Dachseite eine lichtdurchlässige Bautafel 18a, auf der rechten Dachseite eine lichtdurchlässige Bautafel 17a dargestellt und links eine Bautafel in Form einer Wand 19a, wobei alle drei Bautafeln nach dem Prinzip der vorliegenden Erfindung im einzelnen wie folgt ausgebildet sind : alle Bautafeln sind typisiert, wie im Zusammenhang mit Figur 1 beschrieben, also mit einer im äußeren Bereich angeordneten Luftkammer 4 ausgerüstet, die nach außen durch eine Außenwand 5 abgedeckt ist. Die Luft in der Luftkammer 4 nimmt Transmissionswärme auf, die aus dem Gebäudeinnern über die Rückwand 2a, die Wärmedämmung 3 und die Mittelwand 2b nach außen zu fließen bestrebt ist. Die lichtdurchlässige Bautafel 18 a ist zur Erzielung einer hohen Lichtdurchlässigkeit einerseits, einer möglichst guten Wärmedämmung andererseits und im Interesse der hier erfindungsgemäß angewandten Wärmerückgewinnung als Drei-Scheiben-Konstruktion ausgebildet, die im einzelnen noch in Figur 4 dargestellt ist. Hier ist der Rahmen 1 derart ausgebildet, daß die beiden inneren Scheiben 2 a und 2b einen abgeschlossenen inneren Luftraum 3b umschließen, der die Lichtdurchlässigkeit sicherstellt aber bereits eine hohe Wärmedämmung bewirkt (enthält ruhende Luft). Zwischen der äußeren Scheibe 5 und der mittleren Scheibe 2b ist die Luftkammer 4 ausgebildet, die jedoch nicht mit ruhender Luft gefüllt ist, sondern von der als Wärmetransportmittel dienenden Zirkulationsluft durchströmt wird, die durch die Zuleitung 6 eintritt und durch die Ableitung 7 austritt, wie in Figur 3 und 4 durch die Pfeile angedeutet ist.

Die Bautafel 17 a in Figur 3 ist im Prinzip genauso aufgebaut wie dies bisher insbesondere im Zusammenhang mit Figur 1 beschrieben wurde. Die Figur 3 veranschaulicht

0019820

auch in Übereinstimmung mit dem Prinzip der Figur 1, wie die drei verschiedenen Bautafeln für die Wärmerückgewinnung durch eine gemeinsame Wärmepumpe nutzbar gemacht werden. Alle drei Wärmefangelemente bzw. Bautafeln 17a, 18a, 19a sind nämlich durch Zuleitungen 9 und Ableitungen 8 an den äußeren Kreislauf der Wärmepumpe 10 angeschlossen. Durch Regelorgane 22, 23 können die einzelnen Strömungskreise der Wärmefangelemente bzw. Bautafeln 17a, 18a, 19a einreguliert oder auch abgeschaltet werden. Wesentlich ist, daß die Wärmefangelemente bzw. Bautafeln 17a, 18a, 19a zusammen mit den Leitungen 8 und 9, den Regelorganen 22 und 23 und der Pumpe 24 einen geschlossenen Kreislauf bilden, durch den die von den Wärmefang-Elementen bzw. Bautafeln aufgefangene Transmissionswärme über die Wärmepumpe 10 nutzbar gemacht wird. Diese Nutzbarmachung erfolgt in der Weise, daß beispielsweise Raumluft 11 aus dem Gebäudeinnern angesaugt, in der Wärmepumpe 10 mit Hilfe der rückgewonnenen Wärme erwärmt und dann mit höherer Temperatur bei 12 wiederum dem Gebäudeinneren zugeführt wird. Die Luft, die im äußeren Kreislauf der Wärmepumpe 10 genutzt wird, zirkuliert in einem geschlossenen System derart, daß sie jeweils mit einer optimalen niedrigen Temperatur in den Luftkammern 4 Transmissionswärme aufnimmt, wobei durch den Entfeuchter 13 dafür gesorgt wird, daß innerhalb der "Wärmefang-Elemente" bzw. Bautafeln und Leitungen 8 und 9 keine unerwünschte Kondensation, Luftfeuchtigkeit oder sogar Eisbildung eintreten kann.

Liegt die Außentemperatur der Umgebund über der Temperatur der zirkulierenden Luft in den Luftkammern 4, so kann auch von außen Wärme aufgenommen werden.
Man kann so die Bautafel benutzen, um einen "Wärmefang" auch von außen her zu betreiben, selbst wenn keine Sonnenstrahlung vorhanden ist, also bei bedecktem Himmel und insbesondere bei Nacht.

Es besteht die Möglichkeit, Bautafeln der hier beschriebenen Art auch nachträglich auf der Außenwand von bestehenden Gebäuden, beispielsweise an Ziegelwänden so anzubringen, daß die durch die Außenwand hindurchtretende Transmissionswärme abgefangen und in einer Wärmepumpe verwertet werden kann und eine zusätzliche Wärmedämmung an der betreffenden Außenwand erreicht wird.

Einzelne Teil-Kreisläufe der Gesamtanlage können ferner mit individuellen, automatisch wirksamen Temperatur-Reglern ausgerüstet werden, derart, daß optimale Temperatur-Verhältnisse sowohl für jeden einzelnen Teil-Kreislauf wie auch für die Gesamtanlage erzielt werden.

Das in Figur 5 gezeigte Gewächshaus weist schräg angeordnete, lichtdurchlässige Dachelemente 18 auf, die ihrerseits eine Außenwand 5, eine Innenwand 2 und eine Luftkammer 4 enthalten und als "Wärmefang-Elemente" die aus dem Innenraum des Gewächshauses nach außen strömende Transmissionswärme abfangen. Die in den Dachelementen 18 erwärmte Luft wird über eine obere Ableitung 7 und weiter über ein Ableitungsrohr 8 mit Hilfe des Gebläses 31 einer Wärmepumpe 10 zugeführt. Die aus der Wärmepumpe 10 austretende abgekühlte Luft wird über Zuleitungsrohre 9, zwei Zuleitungen 6 zugeführt, aus welchen die relativ kühle Luft wieder in die Luftkammern 4 der Dachelemente 18 eintritt. Die Dachelemente 18 sind zu diesem Zweck an ihren oberen und unteren Stirnseiten oder Enden mit Öffnungen versehen, die mit den Innenräumen der Zu- bzw. Ableitungen 6, 7 kommunizieren. Die entsprechenden Einzelheiten sind hier nicht gezeigt. Die Zuleiten 6 und die Ableitungen 7 bilden mit den Dachelementen 18 "Bautafeln".

Zur Vereinfachung ist angenommen, daß die Wärmepumpe 10 aus dem Gewächshausinneren kommende, relativ kühle, bodennahe Raumluft 11 ansaugt, erwärmt und als Warmluft 12 über das Gebläse 32 wieder dem zu beheizenden Innenraum des Gewächshauses zuführt. Ohne Änderung des Prinzips der Wärmerückgewinnung ist es auch möglich, an Stelle einer Luft/Luft-Wärmepumpe eine Luft/Wasser-Wärmepumpe zu betreiben, wobei das erwärmte Wasser als Gebrauchswasser bzw. für beliebige gewerbliche Zwecke genutzt werden kann.

Bei dieser Ausführungsform der Erfindung wird nun die in den Luftkammern 4 der Dachelemente 18 befindliche Luft mindestens teilweise aus der Außenatmosphäre über das Außenluft-Zuleitungsrohr 33 angesaugt. Infolgedessen ist bei diesem Ausführungsbeispiel eine Mischungsmöglichkeit vorgesehen. Ein Regelorgan 35 gestattet es, die Außenluft entweder im vollen Umfang in das System einzuführen oder in gedrosselter Menge oder auch die Zufuhr der Außenluft vollständig abzustellen. Sinngemäß ermöglicht ein zweites Regelorgan 36 in Verbindung mit einem weiteren Regelorgan 37 die aus der Wärmepumpe 10 austretende abgekühlte Luft ganz oder teilweise entweder einem Abluftrohr 38 zuzuführen oder aber über eine Verbindungsleitung 39 wieder in die Zuleitungsrohre 9 einzuspeisen. Im Ausführungsbeispiel nach Figur 6 ist schließlich noch eine Rohrleitung 40 vorgesehen, die in Verbindung mit einem weiteren Regelorgan 41 die Möglichkeit eröffnet, auch die aus der Ab- leitung 7 über das Ableitungsrohr 8 zur Wärmepumpe 10 strömende erwärmte Luft teilweise mit Außenluft aus dem Zuleitungsrohr 33 zu mischen und mit Hilfe des Gebläses 31 in die Wärmepumpe 10 einzuspeisen. Zweckmäßig sind weitere Regelorgane 42 in die Zuleitungsrohre 9 vor deren Anschlüsse an die Leitungen 6 eingebaut, um bei Parallelschaltung verschiedener "Wärmefang-Elemente", insbesondere wenn diese in verschiedene Himmelsrichtungen zeigen, eine individuelle Steuerung der dem Wärmetransport dienenden Luft zu ermöglichen, die über die Zuleitungsrohre 9 und die Leitungen 6 den Luftkammern 4 zugeleitet wird, damit jeweils die optimalen Temperaturverhältnisse eingehalten werden können.

Beim Ausführungsbeispiel nach den Figuren 5 und 6 ist angenommen, daß die Wärmepumpe 10 einen elektrischen Antriebsmotor 43 besitzt.

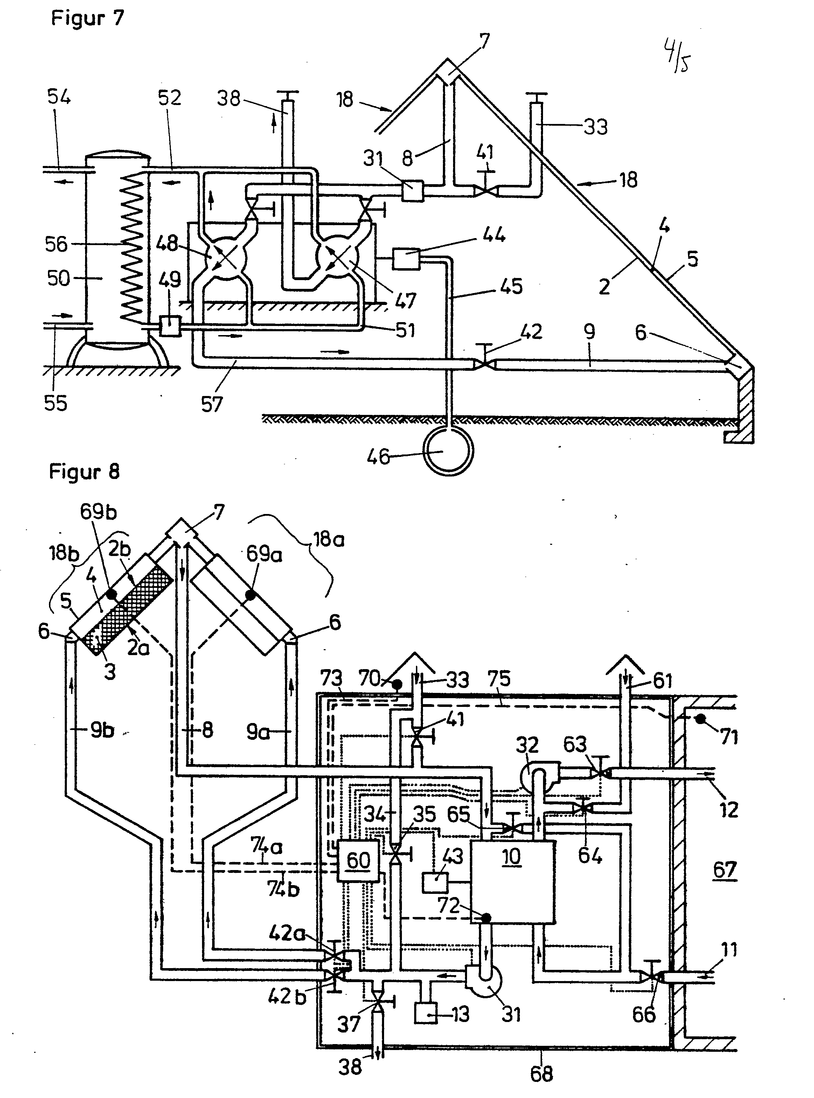

Gemäß Figur 7 ist eine Wärmepumpe vorgesehen, die durch eine Brennkraftmaschine 44 angetrieben wird. Diese Brennkraftmaschine kann ihre Verbrennungsluft zweckmäßig z.B. aus dem Ableitungsrohr 7 bzw. 8 beziehen, das durch die Transmissionswärme aufgeheizte Luft führt. Ferner kann in vorteilhafter Weise die in den heißen Abgasen der Brennkraftmaschine enthaltene, mechanisch ungenutzte Wärme der Wärmepumpe zugeführt und auf diese Weise verwertet werden. Im einzelnen ist beim Ausführungsbeispiel nach Figur 7 die Anordnung wie folgt getroffen :
Die in den Luftkammern 4 der Dachelemente 18 durch die Transmissionswärme erwärmte Luft wird über die Leitungen 7 und 8 mittels des Gebläses 31 einer Wärmepumpe zugeführt, die zwei Stufen 47, 48 besitzt. Die die Wärmepumpe treibende Brennkraftmaschine 44 bezieht ihren Brennstoff über eine Leitung 45 aus einer Speiseleitung oder einem Behälter 46. Die Verbrennungsluft für die Brennkraftmaschine stammt, wie bereits oben erwähnt, aus dem Fangsystem für die Transmissionswärme bzw. der zweiten Stufe 48 der Wärmepumpe.

Die in der zweistufigen Wärmepumpe abgekühlte Luft wird dann, ähnlich wie beim Ausführungsbeispiel, nach den den Figuren 5 und 6, wieder im Kreislauf den Luftkammern 4 in den Dachelementen 18 zugeführt, wo sie erneut Transmissionswärme aufnimmt. Ein Unterschied gegenüber den Ausführungsbeispielen nach Figur 5 und 6 besteht bei der Ausführungsform nach Figur 7 darin, daß die zweistufige Wärmepumpe auf der Sekundärseite einen Wasserkreislauf in Verbindung mit z.B. einem Warmwasser-Speicherbehälter 50 betreibt. Zu diesem Zweck ist die Sekundärseite der Wärmepumpe über Rohrleitungen 51, 52 mit einer Heizschlange 56 im Warmwasser-Speicherbehälter 50 verbunden und eine Pumpe 49 sorgt für die Beschleunigung des Wasserkreislaufs in der Heizschlange 56. Der Vollständigkeit halber wird noch bemerkt, daß die Primärseite der Stufe 48 der Wärmepumpe über eine Rohrleitung 57 mit dem Zuleitungsrohr 9 verbunden ist, während die Primärseite der Stufe 47 der Wärmepumpe an das Abluftrohr 38 angeschlossen ist, welches zur Außenatmosphäre geführt ist.

Als Fortführung der vorliegenden Erfindung wird die Gesamtheit der für den Betrieb des Systems erforderlichen maschinellen Einrichtungen zusammen mit der Regelanlage in einer Raumzelle so zusammengefaßt, daß lediglich die Verbindungsleitungen für Luft und Steuerung zu den als "Bautafeln" ausgeführten Wärmefang-Elementen auf der einen Seite und die Nutz-Wärmeleitungen für die Heizungs- oder Warmwasserversorgungs- oder gewerbliche Anlagen auf der Wärmeverwertungsseite örtlich auszuführen sind.

Eine solche Raumzelle 68 ist in Figur 8 in Form eines Quaders mit Fußboden-, Wand- und Deckenelementen dargestellt. Außerhalb der Raumzelle 68 ist durch das System von Leitungen 6, 7, 8, 9a, 9b der an der Baustelle auszuführende Anschluß an die Bautafeln bzw. Wärmefangelemente dargestellt. Dabei ist hier, zur Vereinfachung, ein sattelförmiges Dach mit Wärmefang-Elementen 18a und 18b dargestellt, die in zwei verschiedenen Himmelsrichtungen zeigen, wodurch auch verschiedene Temperaturverhältnisse bedingt werden. Infolgedessen muß die Regelung der Wärmetransportluft für die verschiedenen Wärmefang-Elemente 18a, 18b individuell durch Regelorgane (Ventile) 42a und 42b

0019820

erfolgen (bei einer größeren Anzahl verschieden angeordneter Wärmefang-Elemente sinngemäß durch entsprechend zahlreiche Regelorgane bzw. Ventile).

Auf der anderen Seite der Raumzelle 68 ist der zu beheizende Raum 67 oder die zu beheizende Raumgruppe schematisch angedeutet. Dabei ist einfach angenommen, daß die zu erwärmende Raumluft bei 11 angesaugt und durch eine Wärmepumpe 10 erwärmte Zuluft 12 in den Raum 67 abgegeben wird. Die Wärmepumpe 10 entzieht die Wärme entweder der zirkulierenden Wärme-Transportluft aus den Wärmefangelementen 18a, 18b oder aber der Außenluft, die durch das Außenluft-Zuleitungsrohr 33 angesaugt und durch den Abluft-Kanal 38 ausgeblasen wird. Durch entsprechende Einstellung der Regelorgane (Ventile) 41, 42, 37 wird auch ein Mischluft-Betrieb möglich, In jedem Fall wird die Wärmepumpe 10 durch den Motor 43 betrieben, die Temperatur der Wärme-Transportluft am Ausgang der Wärmepumpe 10 durch das Steuerorgan 72 eingestellt und die Luft durch das Gebläse 31 in Pfeilrichtung bewegt. Mit 13 ist ein Entfeuchter bezeichnet. Auf der Nutzwärmeseite der Wärmepumpe 10 wird die Heizluft durch ein Gebläse 32 in Pfeilrichtung bewegt, wobei entweder im reinen Umluftbetrieb gearbeitet oder Frischluft über den Ansaugstutzen 61 beigemischt oder ausschließlich verwendet werden kann. Schließlich kann über das Regelorgan 65 auch Abluft aus dem Raum 67 der Wärmepumpe 10 zwecks Nutzung der Abwärme zugeführt werden.

Das wesentliche ist nun, daß ein Regler 60 nach einem ihm einmalig aufgegebenen, aber auch individuell veränderlichen Programm folgende Leistungen vollbringt :
1. Der beim Wärmeverbraucher (hier Luftheizung des Raumes 67) vorhandene Wärmebedarf wird durch den Temperaturfühler 71 über eine Steuerleitung 75 an den Regler 60 gemeldet, der dann die weiteren Funktionen freigibt oder bei fehlendem Wärmebedarf sperrt.

2. Bei geeigneten Temperaturen über etwa 3°C setzt der Außenluft-Temperaturfühler 70 über die Steuerleitung 73 und den Regler 60 den Motor 43 der Wärmepumpe 10 sowie den Motor des Gebläses 31 in Funktion, nachdem die Regelorgane 41 und 37 geöffnet, hingegen die Regelorgane 42a, b und 35 geschlossen worden sind. Gleichzeitig wird die gesamte Heizungsanlage im Raum 67 mit den zugehörigen Regelorganen und dem Gebläse 32 auf der rechten Seite der Figur 8 in Tätigkeit gesetzt.

3. Sofern der Außenluft-Temperaturfühler 70 ungeeignetes Wetter meldet, d.h. also Temperaturen unter etwa 3°C, wird die Arbeit der Wärmepumpe 10 vom "Außenluftbetrieb" auf "Zirkulationsluftbetrieb" umgestellt durch sperrung der Regelorgane oder Ventile 41 und 37 und Öffnung der Regelorgane oder Ventile 42a,b. Gleichzeitig meldet der Temperaturfühler 69a, b über die Steuerleitung 74 a, b an den Regler 60 die Temperatur auf der Innenseite der Luftkammer 4, wodurch die Einstellung der Temperatur der Zirkulationsluft über das Steuerorgan 72 erfolgt. Den entsprechenden Teilen der vorhergehenden Ausführungsbeispiele gleichartige Teile sind in Figur 8 mit den gleichen Bezugszahlen gekennzeichnet und werden nicht erneut beschrieben.

Zu betonen ist, daß bei dem hier dargestellten Beispiel nur zwei verschiedene Arten von "Wärmefang-Elementen" 18a, 18b vorhanden sind, daß aber sinngemäß die Regelanlage auf eine beliebige Anzahl von Wärmefang-Elementen ausgedehnt werden kann. Schon bei zwei Wärmefang-Elementen gemäß dem hier beschriebenen Beispiel ist die Bedeutung der Zusammenfassung aller beschriebenen Baukomponenten in einer als Baueinheit auf die Baustelle zu liefernden "Raumzelle"
erkennbar, die auch als "Energiezelle" bezeichnet
werden kann. Je größer die Zahl der in der "Energiezelle" zusammenarbeitenden Komponenten und je
größer die Zahl und Art der an die Energiezelle
anzuschließenden Wärmefang-Elemente ist, desto
wichtiger ist es, daß die gesamte Regelanlage mit
allen Komponenten fertig verdrahtet als Baueinheit
geliefert wird.

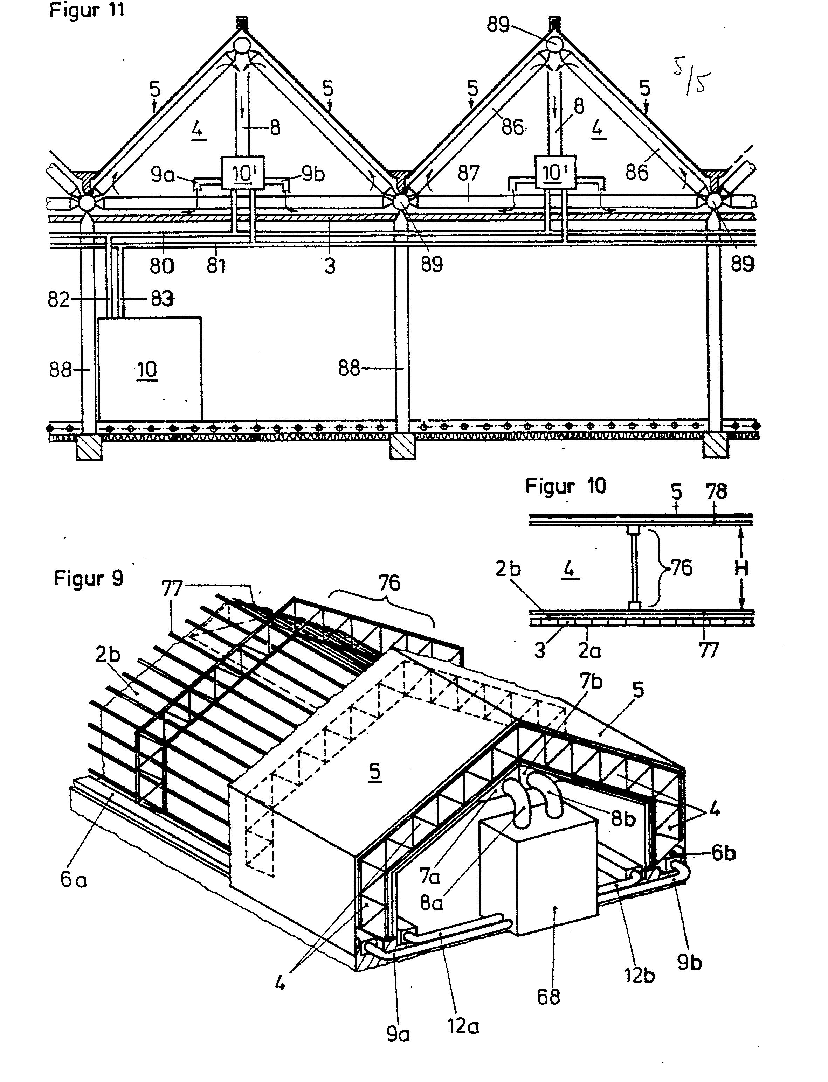

Die Figuren 9 und 10 zeigen eine weitere Anwendung des
erfindungsgemäßen Systems bei einem Gewächshaus, dessen
vollständiges Dach und Seitenwände als "Wärmefang-Elemente"
ausgebildet sind. Eine Raumfachwerkkonstruktion 76 aus
Stahlbindern ist mit horizontal verlaufenden Pfetten 78,
77 versehen, welche eine Außen-Glashaut 5 und eine Innen-
Glashaut tragen, die zur Erzielung einer Wärmedämmung
eine Luftschicht 3 zwischen einer oberen Scheibe 2b und
einer unteren Scheibe 2a enthält. Diese Scheiben können
aus Silikatglas bestehen oder gemäß Figur 10 Teile einer
sogen. Doppelstegplatte aus Acrylglas bilden. Von Bedeutung ist, daß die Luftkammer 4 zwischen der Außen-
Glashaut 5 und der oberen Scheibe 2b der Innen-Glashaut
eine der Konstruktionshöhe der Stahlbinder entsprechend
große Höhe H hat (Figur 10). Durch diese große Konstruktionshöhe H bzw. -Breite wird bewirkt, daß die von den
Zuleitungen 6a, 6b in die Luftkammer 4 eingebrachte Wärmetransportluft nur mit einer sehr kleinen Geschwindigkeit
in der Größenordnung von Bruchteilen eines Meters pro
Sekunde in der Luftkammer strömt. Dies hat wiederum zur
Folge, daß der Wärmeübergang von der oberen Scheibe 2b
der Innen-Glashaut auf die Wärmetransportluft in der Luftkammer 4 gegenüber ruhender Luft nicht merklich vergrössert und im Winter die Temperatur der Innen-Glashaut nicht nachteilig abgesenkt wird. Ferner werden dadurch die Betriebskosten für die Bewegung der Wärmetransportluft gesenkt und eine größere Wirtschaftlichkeit erreicht.

Die Figur 9 zeigt ferner, daß am Kopfende des Gewächshauses eine Raum- oder Energiezelle 68 (vergleiche auch Figur 8) angeordnet ist, die über relativ wenige Rohrleitungen 8a, 8b und 9a, 9b an die Zuleitungen 6a, 6b bzw. Ableitungen 7a bzw. 7b für die Wärmetransportluft angeschlossen werden kann. Mit 12 a und 12b sind die von der Energiezelle 68 ausgehenden Rohrleitungen für die Raumheizung bezeichnet, wobei durch diese Rohrleitungen Heizluft strömt, während die die Raumluft absaugenden und zur Wärmepumpe führenden Rohre nicht gezeigt sind.

Figur 11 zeigt ein weiteres Sheddach, welches ein auf Stützen 88 aufgelagertes Raumfachwerk aus Stäben 86, 87 und Knotenstücken 89 enthält. Dieses die Außenhaut 5 tragende Raumfachwerk liegt in einer großen Luftkammer 4, die nach unten zum Beispiel durch eine untergehängte Decke mit einer Wärmedämmschicht 3 abgeschlossen ist. Die Dachflächen können, ähnlich wie in Figur 2, auf der einen Seite lichtdurchlässig und auf der anderen Seite lichtundurchlässig ausgebildet sein. Beim Ausführungsbeispiel nach Figur 11 kann die Außenhaut 5 einen hohen Wärmedurchgangswert aufweisen, da durch die Außenhaut hindurch ein Wärmegewinn aus der Außenatmosphäre möglich sein soll.

Im Unterschied zu den bisher behandelten Ausführungsformen sind gemäß Figur 11 mehrere Verdampfer 10' der Wärmepumpe von deren Hauptteil 10 getrennt innerhalb der Luftkammer 4 angeordnet. Bei großen Bauten kann folglich z.B. in jedem Sheddach-Abschnitt ein Verdampfer 10' angeordnet sein, der mit dem Hauptteil 10 der Wärmepumpe über Rohrleitungen 80, 82 bzw. 81, 83 verbunden ist.

Aus jedem Verdampfer 10' tritt über die Rohrleitungen 9a, b relativ kalte Luft in die Luftkammer 4 ein, nimmt hier Wärme auf und wird durch die Rohrleitung 8 wieder dem Verdampfer 10' zugeführt. Diese Anordnung bringt den Vorteil, daß sowohl die Querschnitte der Rohrleitungen 8, 9 für die Wärmetransportluft relativ klein gehalten werden können, wie auch die Verbindung zum Hauptteil 10 der Wärmepumpe mit Leitungen 80, 82 bzw. 81, 83 geringen Querschnitts ausgeführt werden kann, da diese nur das Kältemedium zu führen haben.

<u>Patent-Ansprüche</u>

1. System zur Rückgewinnung und Wiederverwendung von Transmissionswärme bei Gebäuden mit Hilfe einer Wärmepumpe, mit in den Außenteilen (Außenwände, Dach und/oder Fenster) des Gebäudes vorgesehenen großflächigen Luftkammern, gekennzeichnet durch die Kombination folgender Merkmale :

   a) zum Wärmetransport zwischen den "Wärmefang-Elementen" (18, 19) und der Wärmepumpe (10) dient eine begrenzte Menge von Transportluft, die in einem abgeschlossenen Umlauf-System zirkuliert;

   b) die Transportluft wird in die Wärmefang-Elemente (18, 19) mit einer Temperatur eingeführt, die unter dem Mittelwert der Umgebungs-Temperatur der Wärmefang-Elemente liegt;

2. System nach Anspruch 1, dadurch gekennzeichnet, daß die Wärmefang-Elemente (18, 19) auf der Warm-Seite eine Dämmschicht (3) mit einem großen Wärmedurchlaß-Widerstand, auf der Kalt-Seite eine Wand (5) mit einem kleinen Wärmedurchlaß-Widerstand besitzen.

3. System nach Anspruch 1 und 2, dadurch gekennzeichnet, daß die in der Wärmepumpe (10) abgekühlte Luft in den Luftkammern 4 wahlweise als reine Zirkulationsluft umläuft oder teilweise oder ganz als Frisch-Luft aus der Außenatmosphäre angesaugt und nach Verlassen der Wärmepumpe im abgekühlten Zustand wieder in die Außenatmosphäre abgegeben wird.

4. System nach Anspruch 1 bis 3, dadurch gekennzeichnet, daß die in den Luftkammern (4) erwärmte Luft in der Wärmepumpe (10) unter die Temperatur der Luft aus der Außenatmosphäre abgekühlt wird.

5. System nach Anspruch 1 bis 4, dadurch gekennzeichnet, daß die der Außenatmosphäre entnommene Luft mit einer im Wärmerückgewinnungs-System der Wärmefang-Elemente (18) zirkulierende Luftmenge gemischt und dabei die Eintrittstemperatur der gemischten Luft in die Luftkammern (4) in einem optimalen Verhältnis unter die Mitteltemperatur der Luft in den Luftkammern (4) einreguliert wird.

6. System nach Anspruch 1 bis 5, dadurch gekennzeichnet, daß die Wärmepumpe (47, 48) durch eine Brennkraftmaschine angetrieben wird und die Wärmepumpe auch die Abwärme der Brennkraftmaschine zusätzlich zur Umwelt-Wärme und Transmissionswärme verwertet.

7. System nach Anspruch 1 bis 6, dadurch gekennzeichnet, daß die Temperatur der Transportluft für verschiedene Teil-Kreisläufe des Gebäudes in Abhängigkeit von der Himmelsrichtung und der Lage der Gebäude-Außenteile für jeden einzelnen Teil-Kreislauf geregelt wird.

8. System nach den Ansprüchen 1 bis 7, gekennzeichnet durch ein gegenüber dem Volumen der Wärmedämmschicht (3) vielfach größeres Volumen der Luftkammer (4), um die Strömungsgeschwindigkeit der Transportluft in der Luftkammer (4) und infolgedessen den Wärmeübergang von innen nach außen auf die Luft in der Luftkammer (4) klein zu halten.

9. System nach Anspruch 8, dadurch gekennzeichnet, daß eine tragende Raumfachwerkkonstruktion (76, 86, 87, 89) für eine Außenhaut (5) mindestens mit wesentlichen Teilen innerhalb der Luftkammer (4), also zwischen der Außenhaut (5) und der Wärmedämmschicht (3) angeordnet ist.

10. Bautafel zur Verwendung als Gebäude-Außenteile bei dem System nach den Ansprüchen 1 bis 8, dadurch gekennzeichnet, daß die Bautafel (18, 19) statisch tragend und wärmedämmend ausgebildet ist und zwischen einer Dämmschicht (3) und einer Außenwand (5) eine Luftkammer (4) vorgesehen ist, deren Umriß etwa demjenigen der Bautafel (18, 19) entspricht und die mit wenigstens einer Zuleitung (6) und Ableitung (7) für die in dem Kreislauf zu und von der Wärmepumpe (10) zirkulierenden Luft versehen ist.

11. Bautafel nach Anspruch 10, dadurch gekennzeichnet, daß die Bautafel (18, 19) an zwei gegenüberliegenden Schmalseiten mit Zu- und Ableitungen (6, 7) für die zirkulierende Luft versehen ist, die mit entsprechenden Zu- und Ableitungen (6, 7) weiterer Bautafeln (18, 19) kuppelbar sind, um eine Addition von Bautafeln zur Bildung entsprechender großer Gebäudeflächen und eine zusammengefaßte Ableitung und Zuführung der zirkulierenden Luft zu bzw. von der Wärmepumpe (10) zu ermöglichen.

12. Bautafel nach den Ansprüchen 10 und 11, dadurch gekennzeichnet, daß die Zu- und Ableitungen (6, 7) für die zirkulierende Luft zugleich Abstützelemente für die Bautafeln (18, 19) bilden und z.B. aus rahmenbildenden Hohlprofilen mit Kupplungselementen bestehen, die ihrerseits dem Anschluß an benachbarte Bautafeln und/oder an Sammel-Zuleitungen und -Ableitungen dienen.

13. Regelanlage zur Verwendung in dem System nach Anspruch 1, dadurch gekennzeichnet, daß ein Temperaturfühler (69) über einen Regler (60) den Luftkammern (4) reine Zirkulationsluft aus der Wärmepumpe (1o) zuführt, deren Eintrittstemperatur in die Luftkammern 4 unter der Temperatur liegt, die der Temperaturfühler (69) mißt.

14. Regelanlage zur Verwendung in dem System nach Anspruch 3 dadurch gekennzeichnet, daß bei Außenlufttemperaturen über etwa 3°C, die einen ausreichenden Entzug von Wärme aus der Außenluft ermöglichen, ein Temperaturfühler (7O) über einen Regler (60) der Wärmepumpe (10) Außenluft zuführt, die nach dem Durchtritt durch die Wärmepumpe (10) abgekühlt als Fortluft in die Außenatmosphäre abstömt, während wenigstens ein in einer Luftkammer 4 angeordneter Temperaturfühler (69) die Zirkulation der Luft durch die Luftkammern (4) sperrt und bei Außenlufttemperaturen unter etwa 3° C der Temperaturfühler (70) die Außenluftzufuhr zur Wärmepumpe (10) sperrt, während der Temperaturfühler (69) über den Regler (60) in den Luftkammern (4) reine Zirkulationsluft aus der Wärmepumpe (10) umlaufen läßt, deren Eintrittstemperatur in die Luftkammern (4) unter der Temperatur liegt, die der Temperaturfühler (69) mißt.

15. Regelanlage nach Anspruch 13 und 14, dadurch gekennzeichnet, daß der Regler(60) die Wärmepumpe (10) und die der Wärmepumpe zugeordneten Baukomponenten, wie z.B. Gebläse 31, 32 usw. in einer Raumzelle (68) mit Außenanschlüssen betriebsfertig montiert sind.

Figur 1

0019820

1/5

Figur 4 A

Figur 4

Figur 4 B

Figur 2

Figur 3

**Figur 5**

**Figur 6**

Figur 7

Figur 8

0019820

4/5

**Figur 11**

5/5

Figur 11

**Figur 10**

Figur 10

**Figur 9**

Figur 9

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | **EINSCHLÄGIGE DOKUMENTE** | | |
| A | DE - A1 - 2 739 373 (TREADUAC N.V.)<br>* Seite 6, 1.u.3.Absatz<br>Seite 7, 1.Absatz *<br><br>-- | 1 | F 24 J 3/04<br>F 24 D 19/00 |
| | DE - A1 - 2 720 319 (MAX-PLANCK-GESELLSCHAFT ZUR FÖRDERUNG DER WISSENSCHAFTEN E.V.)<br>* Seite 3, Zeilen 17-20<br>Seite 3, Zeilen 25-28<br>Seite 4, Zeile 1<br>Seite 5, Zeilen 19-30<br>Seite 6, Zeilen 1-28<br>Seite 7, Zeilen 20-23 *<br><br>-- | 1,3,4<br><br>14 | |
| A | DE - A1 - 2 528 429 (ROBERT BOSCH GMBH)<br>* Seite 1, 1.Absatz<br>Seite 2, 1.und 3.Absatz<br>Seite 3, 1.-3.Absatz,<br>Fig.1 *<br><br>-- | 1 | **RECHERCHIERTE SACHGEBIETE (Int. Cl. 3)**<br><br>F 24 J 3/00<br>F 24 D 11/00<br>F 24 D 19/00 |
| | DE - A1 - 2 633 775 (MOTORHEIZUNG GMBH)<br>* Seite 6, Zeilen 28-31<br>Seite 7, Zeilen 1-4<br>Seite 8, Zeilen 11-26 *<br><br>-- | 6 | |
| | DE - A1 - 2 547 214 (ENERGIE-TECHNIK GMBH)<br>* Seite 4, 1.Absatz<br>Seite 8, 1.und 2.Absatz<br>Beschreibung der einzigen Fig.,<br>Seite 9, 2.Absatz *<br><br>-- | 1,2,3 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 17-07-1980 | ENDLER |

Europäisches
Patentamt

**EUROPÄISCHER RECHERCHENBERICHT**

0019820

EP 80102745.9

| Kategorie | Kennzeichnung des Dokuments mit Angabe, soweit erforderlich, der maßgeblichen Teile | betrifft Anspruch |
|---|---|---|
| | US - A - 4 136 669 (GEORGE T. LANE) | 10,11 |
| | * Spalte 2, letzter Absatz Spalte 3, 1.-6.Absatz Fig. 1 und 2 * | |

**EINSCHLÄGIGE DOKUMENTE**

KLASSIFIKATION DER
ANMELDUNG (Int.Cl.X 3)

RECHERCHIERTE
SACHGEBIETE (Int. Cl.X 3